# EUROPÄISCHE PATENTSCHRIFT

(11) **EP 1 647 429 B1**
(45) Veröffentlichungstag und Bekanntmachung des Hinweises auf die Patenterteilung: **25.06.2008**
(21) Anmeldenummer: 05017823.5
(22) Anmeldetag: 17.08.2005
(51) Int. Cl.: B60J 7/02, B60J 7/04, B60J 7/047, B60J 7/053

(54) **Dachanordnung für ein Fahrzeug**
Roof arrangement for a vehicle
Agencement de toiture pour un véhicule

(30) Priorität: 15.10.2004 DE 102004050608
(43) Veröffentlichungstag der Anmeldung: 19.04.2006
(73) Patentinhaber: Dr. Ing. h.c. F. Porsche Aktiengesellschaft, 71287 Weissach (DE)
(72) Erfinder: Braun, Wolfgang, 73061 Ebersbach (DE)

(56) Entgegenhaltungen:
- EP-A- 1 389 546
- DE-A1- 10 046 068
- DE-A1- 10 121 888
- US-B1- 6 739 648

## Beschreibung

Die Erfindung bezieht sich auf eine Dachanordnung für ein Fahrzeug, insbesondere einen Personenkraftwagen, gemäß Oberbegriff des Anspruchs 1.

Aus der DE 101 21 888 A1 ist eine gattungsbildende Dachanordnung bekannt. Diese besitzt einen Dachrahmen mit seitlichen Führungsbahnen und einen Schiebedeckel, der in den Führungsschienen zum zumindest teilweisen Freigeben oder zum Verschließen einer Dachöffnung verfahrbar geführt ist. Ferner umfasst die Dachanordnung Lagereinrichtungen, die einerseits am Schiebdeckel angelenkt und andererseits über Führungselemente in den Führungsbahnen abgestützt sind. Jede Lagereinrichtung weist einen Hebel auf, der sowohl schiebedeckelseitig als auch führungsbahnseitig in einem Drehlager befestigt ist. Das schiebdeckelseitige Drehlager besitzt eine Lagerachse, die mit ihrem einen Ende in eine seitliche Steuerbahn hineinragt, die beim Verfahren des Schiebdeckels dessen zusätzliche Hubbewegung steuert. Auf die Lagerachse ist eine Gleithülse aufgebracht, die einen Hülsenabschnitt und einen Ringkragen aufweist, wobei der Hülsenabschnitt in die Steuerbahn ragt.

Aufgabe der Erfindung ist es, eine Dachanordnung der eingangs genannten Art anzugeben, bei der der Schiebdeckel sicher bewegt werden kann.

Gelöst wird diese Aufgabe mit einer Dachanordnung, die die in Anspruch 1 genannten Merkmale aufweist. Weitere Ausgestaltungen der Erfindung sind in den Unteransprüchen angegeben.

Die mit der Erfindung hauptsächlich erzielten Vorteile sind darin zu sehen, dass durch die Außenkontur des Gleitelements verhindert wird, dass es in die Steuerbahn gedrängt wird und darin verklemmen könnte.

Vorteile, die sich aus den in den Unteransprüchen angegebenen Ausgestaltungen ergeben, sind in der nachfolgenden ausführlichen Beschreibung der Erfindung angeführt, die nachfolgend anhand von Ausführungsbeispielen mit Bezug auf die Zeichnung näher erläutert wird. Es zeigen:
- Fig. 1: ein Personenkraftwagen mit einer Dachanordnung und
- Fig. 2: die Dachanordnung in Schnittdarstellung entlang der Linie II-II in Fig. 1
- Fi. 3: vordere und hintere Lagereinrichtung für einen Schiebedeckel der Dachanordnung und
- Fig. 4: eine Steuerbahn für die Hubbewegung des Schiebedeckels.

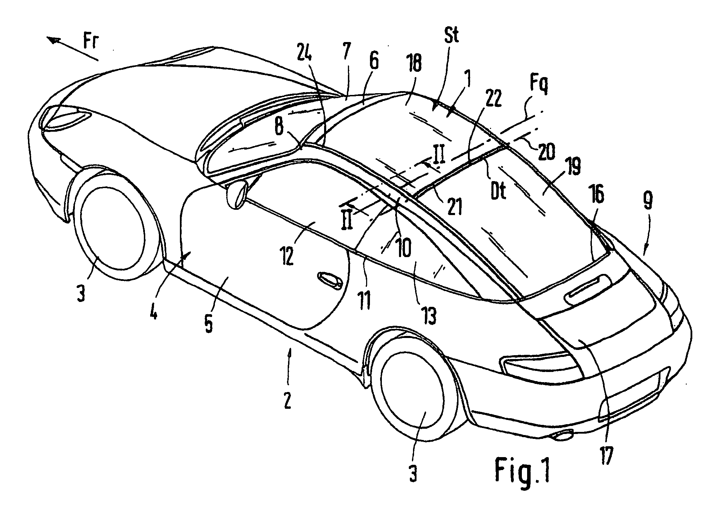

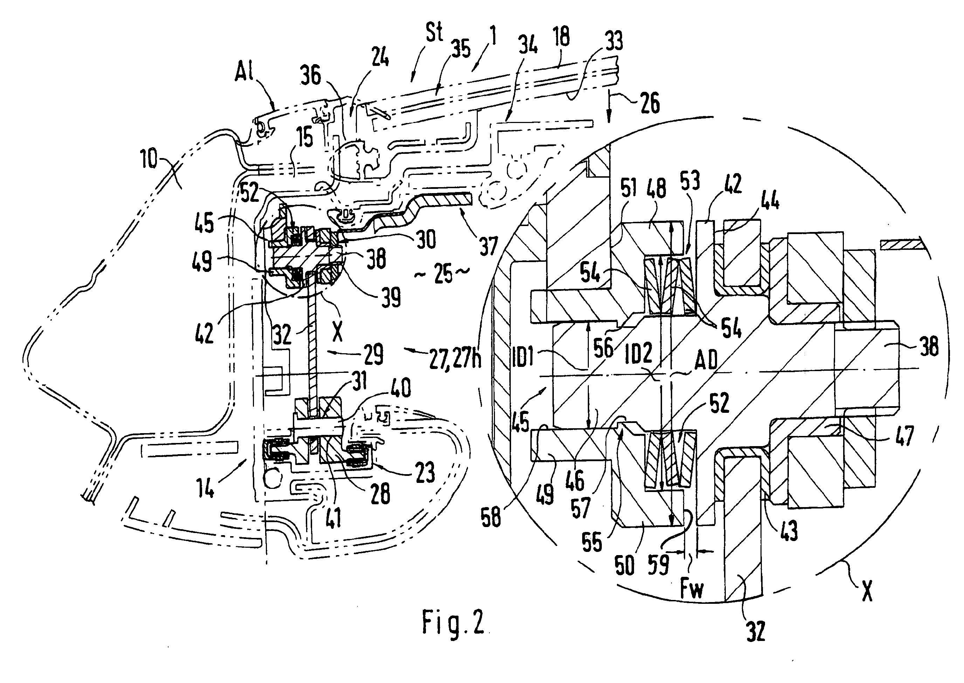

Anhand der Figuren 1, 2 und der Einzelheit X in Fig. 2 wird eine Dachanordnung 1 beschrieben, die an einem Fahrzeug, insbesondere Personenkraftwagen 2, vorgesehen ist, der einen von Rädern 3 getragenen Aufbau 4 umfasst. Der Aufbau 4 weist einen Grundkörper 5 und einen Windschutzscheibenrahmen 6 auf, in den eine Windschutzscheibe 7 eingesetzt ist. Von den oberen Ecken 8 des Windschutzscheibenrahmens 6 erstrecken sich in Richtung des Hecks 9 seitliche Dachlängsholme 10 des Aufbaus 4, die etwa bogenförmig verlaufen, so dass der Aufbau 4 die Form eines Coupes mit Fließheck besitzt. Zwischen den seitlichen Dachlängsholmen 10 und einer darunter liegenden Gürtellinie 11 des Aufbaus 4 sind Seitenscheiben 12 und 13 eingesetzt.

Die Dachanordnung 1 ist zwischen den seitlichen Dachlängsholmen 10 angeordnet und besitzt - gemäß Fig. 2 - einen Dachrahmen 14, der, beispielsweise durch eine umlaufende Verklebung 15, mit dem Aufbau 4 verbunden ist. Der Dachrahmen 14 ist vorzugsweise umflaufend ausgebildet und erstreckt sich vom Windschutzscheibenrahmen 6 bis zu einem vorderen Randbereich 16 vor einer Motorraumzugangsklappe 17. Denkbar wäre es allerdings auch, dass die Dachlängsholme 10 den Dachrahmen bilden.

Die Dachanordnung 1 weist wenigstens einen - in Fahrtrichtung Fr gesehen - vorderen, verlagerbaren Schiebedeckel 18 auf, der starr ausgebildet sein kann und der - in Schließstellung St - an den Windschutzscheibenrahmen 6 und einen hinteren Dachteil 19 angrenzt, der vorzugsweise unverschiebbar am Aufbau 4 bzw. am Dachrahmen 14 befestigt ist. Der hintere Dachteil 19 der Dachanordnung 1 ist in bevorzugter Ausführungsform die Heckscheibe des Fahrzeugs. Es kann vorgesehen sein, dass der hintere Dachteil 19 um eine parallel zur Fahrzeugquerachse Fq verlaufende Klappachse 20 geöffnet werden kann. Vorzugsweise ist zwischen der hinteren Kante 21 des Schiebedeckels 18 und der vorderen Kante 22 des hinteren Dachteils 19 lediglich eine Dichtung Dt vorgesehen.

Der - vorzugsweise durchsichtige - Schiebedeckel 18 ist in seitlichen Führungsbahnen 23, die am Dachrahmen 14 oder an den Längsholmen 10 angebracht sein können, zum Verschließen oder zumindest teilweise Freigeben einer Dachöffnung 24 verfahrbar geführt derart, dass er unter dem hinteren Dachteil 19 abgelegt werden kann. Hierfür ist vorgesehen, den Schiebedeckel 18 zunächst in Richtung des Fahrzeuginnenraums 25 in Pfeilrichtung 26 abzusenken und anschließend nach hinten unter den Dachteil 19 zu verschieben. Für das Absenken in Pfeilrichtung 26 ist der Schiebedeckel 18 über mehrere eine Schwenkbewegung des Deckels 18 ermöglichende Lagereinrichtungen 27 in den Führungsbahnen 23 abgestützt. Vorzugsweise sind in jeder Führungsbahn 23 zwei - in Fahrtrichtung Fr hintereinander angeordnete - Lagereinrichtungen 27 gleitend geführt. Jede Lagereinrichtung 27 ist einerseits am Schiebedeckel 18 und andererseits über ein Führungselement 28 in einer der Führungsbahnen 23 abgestützt. Jede Lagereinrichtung 27 besitzt eine Hebelanordnung 29, die sowohl am Führungselement 28 als auch am Schiebedeckel 18 in einem Schwenk- bzw. Drehlager 30 bzw. 31 drehbar angelenkt ist. Die Hebelanordnung 29 umfasst zumindest einen in den Drehlagern 30 und 31 schwenkbar gelagerten Hebel 32. Durch die Hebelanordnung 29 kann der Schiebedeckel 28 in Pfeilrichtung 26 abgesenkt werden. Entlang den Führungsbahnen 23 kann er dann nach hinten unter den Dachteil 19 gefahren werden.

Der Schiebedeckel 18 weist an seiner dem Fahrzeuginnenraum 25 zugewandten Seite 33 einen Stützrahmen 34 auf, der an der Deckelinnenseite 33 befestigt ist. Der Stützrahmen 34 ist im Deckelrandbereich 35 vorgesehen und läuft in diesem Deckelrandbereich 35 vorzugsweise vollständig um. An dem Stützrahmen 34 kann eine um den Rand des Deckels 18 umlaufende Dichtung 36 angebracht sein, die den Schiebedeckel 18 zur Begrenzung der Dachöffnung 24 hin abdichtet. Die Dichtung Dt kann Bestandteil der Dichtung 36 sein. Eine Abdeckleiste Al kann den freien Raum zwischen Dachlängsholm 10 und Deckel 18 über der Dichtung 36 überspannen.

Die Lagereinrichtung 27 besitzt einen Lagerblock 37, der an dem Stützrahmen 34 befestigt oder einstückig mit diesem ausgebildet ist. Die Hebelanordnung 29 ist mit einer ersten Lagerachse 38 des schiebedeckelseitigen Drehlagers 30 in einem Lagerauge 39 des Lagerblocks 37 drehbeweglich befestigt. Die Hebelanordnung 29 ist außerdem mit einer zweiten Lagerachse 40 in einem Lagerauge 41 des führungsbahnseitigen Drehlagers 31 drehbeweglich befestigt. Die Lagerachsen 38 und 40 verlaufen parallel zur Fahrzeugquerachse Fq. Die Hebelanordnung 29 ist mithin sowohl mit dem Schiebedeckel 18 als auch dem Führungselement 28 schwenkbeweglich verbunden. Die Lagerachse 38 weist etwa mittig noch eine ggf. einstückig mit ihr ausgebildete Scheibe 42 auf. Zwischen der Lagerachse 38 und dem Lagerauge 39 des Hebels 32 ist noch ein im Querschnitt U - förmiges Ringelement 43 angeordnet, an dem auch die Scheibe 42 mit einer Seite 44 anliegen kann.

Für die Steuerung der Hubbewegung in Pfeilrichtung 26 und umgekehrt des Schiebedeckels 18 ist eine seitlich am Dachrahmen 14 angeordnete Steuerbahn 45 vorgesehen, in die ein Bolzenabschnitt 46 der Lagerachse 38 hineinragt. Vorzugsweise sind der Bolzenabschnitt 46 und die erste Lagerachse 38 einstückig ausgebildet und durchsetzen den Hebel 32. Der Bolzen 46 bzw. die Lagerachse 38 sind in dem Lagerauge 39, vorzugsweise durch Zwischenschalten einer Lagerhülse, insbesondere Gleithülse 47, drehbeweglich gehalten. Ferner ist eine gestufte Lagerhülse 48, vorzugsweise aus einem Gleitlagerwerkstoff, auf dem in die Steuerbahn 45 hineinragenden Ende des Bolzens 46 angeordnet. Die Lagerhülse 48 weist außer dem in die Steuerbahn 45 hineinragenden Hülsenabschnitt 49 noch einen Ringkragen 50 auf, der gegenüber dem Hülsenabschnitt 49 mit größerem Außendurchmesser AD ausgeführt ist, so dass - wie vorstehend erwähnt - die Lagerhülse 48 gestuft ausgeführt ist. Der Ringkragen 50 liegt benachbart zur Scheibe 42. Der Außendurchmesser AD des Ringkragens 50 ist so ausgeführt, dass der Ringkragen 50 in jeder Bewegungsstellung des Schiebedeckels 18 zumindest bereichsweise auf einem die Steuerbahn 45 begrenzenden Rand 51 aufliegt. Es ist ferner vorgesehen, zwischen der Lagerhülse 48 und dem Hebel 32, insbesondere der Scheibe 42 eine Federeinrichtung 52 anzuordnen, die die Lagerhülse in Richtung Steuerbahn 45 drängt. Durch den in seinem Außendurchmesser AD entsprechend ausgebildeten Ringkragen 50 wird verhindert, dass die Lagerhülse 48 aufgrund der von der Federeinrichtung 52 aufgebrachten Kraft vollständig in die Steuerbahn 45 hinein gedrückt wird und sich darin verklemmen könnte. Zusätzlich wird der Schiebedeckel 18 durch die von der Federeinrichtung 52 aufgebrachte Kraft in Fahrzeugquerrichtung Fq zwischen den seitlichen Steuerbahnen 45 eingespannt, wodurch er insbesondere in seiner Schließstellung St fest in der Dachöffnung 24 gehalten ist und so zur Geräuschminimierung beiträgt. Die Federeinrichtung 52 ist dafür in Richtung der Fahrzeugquerachse Fq vorgespannt, so dass die Lagerhülse 48 mit entsprechender Vorspannkraft gegen den Rand 51 gedrängt wird. Die Federeinrichtung 52 wird vorzugsweise durch ein Tellerfederpaket 53 gebildet, das mehrere Tellerfedern 54, beispielsweise aus Stahl, aufweist. Dabei sind die Tellerfedern 54 mit ihrer Wölbung wechselweise angeordnet. Die als Ring ausgeführten Tellerfedern 54 sind auf dem Bolzen 46 zwischen Lagerhülse 48 und Hebel 32 bzw. Scheibe 42 angeordnet.

Die Lagerhülse 48 weist im Hülsenabschnitt 49 und im Ringkragen 50 jeweils einen unterschiedlichen Innendurchmesser ID1 und ID2 auf, wobei der Innendurchmesser ID1 kleiner als der Innendurchmesser ID2 und außerdem an den Außendurchmesser des Bolzens 46 angepasst ist. Durch den größeren Innendurchmesser ID2 im Ringkragen 50 kann dort die Federeinrichtung 52 zumindest teilweise aufgenommen sein. Der Außendurchmesser der Tellerfedern 54 ist mithin kleiner als der Innendurchmesser ID2.

Für eine einfache Montage der Federeinrichtung 52 und der Lagerhülse 48 ist zwischen Bolzen 46 und Lagerhülse 48 eine Schnapp - bzw. Rasteinrichtung 55 vorgesehen, die die Lagerhülse 48 auf dem Bolzen rastend hält. Der Bolzen kann für die Rasteinrichtung 55 ein Kerbe 56 aufweisen, in die eine Nase 57 eingreift, die an der Innenseite 58 der Lagerhülse 48 hervorspringt und somit der Rasteinrichtung 55 zugeordnet ist. Die Nase 57 und/oder die Kerbe 56 können umlaufend oder nur abschnittweise ausgebildet sein.

Durch die Lage der Rasteinrichtung 55 wird außerdem ein Federweg Fw zwischen Lagerhülse 48 und Scheibe 42 bzw. Hebel 32 bereitgestellt, der zwischen einer Stirnseite 59 des Ringkragens 50 und der Scheibe 42 gemessen wird. Dieser Federweg Fw ist vorzugsweise so bemessen, dass die Federeinrichtung 52 nicht überlastet bzw. "auf Block" gebracht werden kann, so dass durch den Federweg Fw eine Federkraftbegrenzung erreicht wird, wenn die Stirnseite 59 auf der Scheibe 42 anliegt. Sofern keine Scheibe 42 verwendet wird, gelten die vorstehenden Ausführungen für den Hebel, an dem sich dann die Federeinrichtung 52 abstützt. Durch die Scheibe 42 und das Ringelement 43 wird jedoch eine Entkopplung zwischen Federeinrichtung 42 und Hebel erreicht, so dass das Drehen des Hebels 32 um die Lagerachse 38 ohne größeren Widerstand erfolgen kann. Überdies ist die Federeinrichtung 52 so vorgespannt, dass die daraus resultierende Federkraft noch ein Gleiten und ggf. Rotieren der Lagerhülse 48 in der Steuerbahn 45 bzw. auf dem Rand 51 erlaubt.

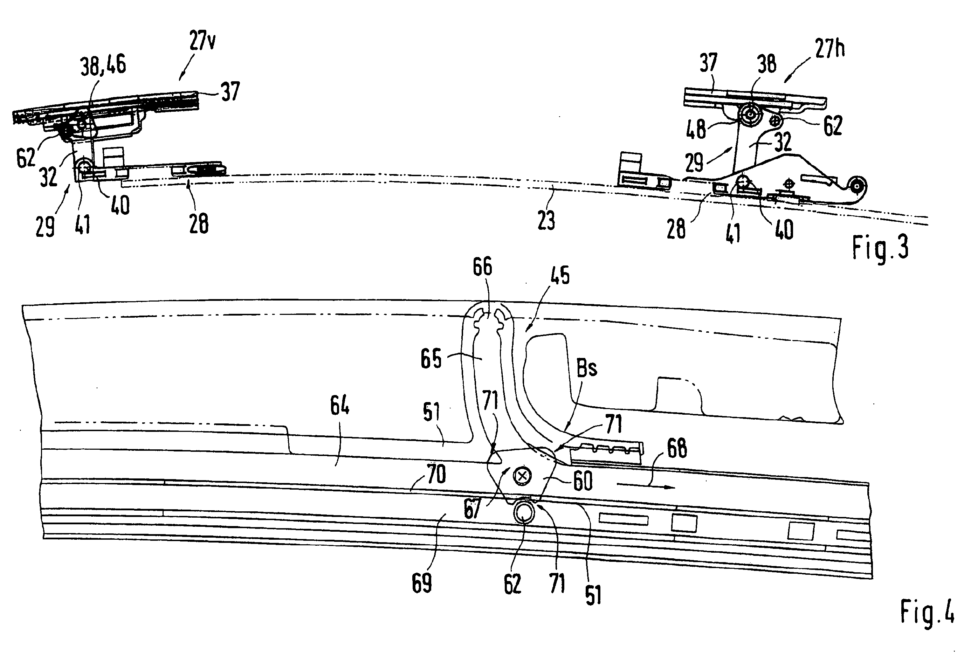

In Fig. 3 sind zwei Lagereinrichtung 27 gezeigt. Eine hintere Lagereinrichtung 27h ist wie vorstehend beschrieben ausgeführt. Eine vordere Lagereinrichtung 27v für den Schiebedeckel 18 (in Fig. 3 nicht gezeigt) wird nachfolgend erläutert, wobei insbesondere auf Unterschiede zur hinteren Lagereinrichtung 27h eingegangen wird. Gleiche bzw. gleich wirkende Teile der vorderen und hinteren Lagereinrichtung sind mit denselben Bezugszeichen versehen. Auf dem in die Steuerbahn 45 hineinragenden Ende der Lagerachse 38 ist ein Gleitelement 60 insbesondere drehbar angeordnet, das aus einem Gleitlagerwerkstoff, beispielsweise Kunststoff, hergestellt ist. Es kann vorgesehen sein, dass auf dem Ende der Lagerachse 48 - wie im Zusammenhang mit der hinteren Lagereinrichtung 27h beschrieben - eine Lagerhülse 48 angeordnet ist, auf deren Hülsenabschnitt 49 das Gleitelement 60 gesteckt ist. Die Lagerhülse 48 kann über die Federeinrichtung 52 kraftbeaufschlagt sein. Es wäre aber alternativ denkbar, dass das Gleitelement 60 direkt auf die Lagerachse 38 gesteckt ist. Auch in dieser Ausführungsform kann die Federeinrichtung 52 vorgesehen sein, die dann allerdings direkt auf das Gleitelement 60 wirkt und dieses auf den Rand 51 der Steuerbahn 45 drängt. Das Gleitelement 60 besitzt eine Außenkontur 61, die dreieckförmig sein kann, insbesondere jedoch so ausgebildet ist, dass es in jeder Bewegungsstellung Bs (Fig. 4) des Schiebedeckels 18 auf dem Rand 51 zumindest abschnittweise so aufliegt, dass es nicht in die Steuerbahn 45 gedrängt werden kann und dort verklemmen könnte.

An einem Fortsatz des Hebels 32 kann ein in die Steuerbahn 45 eingreifender Steuerfortsatz 62 an der vorderen und/oder hinteren Lagereinrichtung 27v, 27h abgebracht sein. Das Gleitelement 60 kann einen entsprechenden Ausschnitt 63 aufweisen, in dem der Steuerfortsatz 62 liegt.

Fig. 4 zeigt die Steuerbahn 45 in einer Seitenansicht. Sie weist einen Längssteuerabschnitt 64 und zumindest einen Hubsteuerabschnitt 65 auf. Das obere Ende 66 des Hubsteuerabschnitts 65 ist der Schließstellung St des Schiebedeckels 18 zugeordnet, in welchem Ende 66 die Lagerachse 38 in der Schließstellung St des Deckels 18 liegt. Der in Fig. 4 gezeigte Ausschnitt der Steuerbahn 45 ist der hinteren Lagereinrichtung 27h zugeordnet. Der Längssteuerabschnitt 64 führt von seiner Kreuzung 67 mit dem Hubsteuerabschnitt 65 aus entgegen Pfeilrichtung 68 weiter bis zu einem hier nicht gezeigten Hubsteuerabschnitt, der der vorderen Lagereinrichtung 27v zugeordnet ist. Der Einfachheit halber ist in Fig. 4 nur das Gleitelement 60 und der Steuerfortsatz 62 gezeigt, die in der in Fig. 4 dargestellten Bewegungsstellung Bs des Deckels 18, die einer zumindest teilweisen Offenstellung des Deckel 18 entspricht, im Bereich der Kreuzung 67 liegen. Durch die Außenkontur (61) des Gleitelements 60 wird nun verhindert, dass es in die Steuerbahn 45 hineingedrängt werden kann, wodurch darin ein Verklemmen des Gleitelements 60 verhindert ist. Der Steuerfortsatz 62 liegt in dieser Bewegungsstellung Bs in einem separaten Abschnitt 69 der Steuerbahn 45, der über eine Steuerwand 70 von dem Längssteuerabschnitt 64 getrennt ist. Es ist ersichtlich, dass das Gleitelement 60 an zumindest drei Punkten 71 auf dem Rand 51 abgestützt ist.

## Patentansprüche

1. Dachanordnung (1) für ein Fahrzeug, insbesondere Personenkraftwagen (2), mit einem Dachrahmen (14), einem Schiebedeckel (18), zwei seitlichen Führungsbahnen (23), in denen der Schiebedeckel (18) zum Verschließen oder zumindest teilweise Freigeben einer Dachöffnung (24) verfahrbar geführt ist, welcher Schiebedeckel (18) mit mehreren Lagereinrichtungen (27) zusammenwirkt, von denen jede Lagereinrichtung (27) einerseits am Schiebedeckel (18) angelenkt und andererseits über ein Führungselement (28) in einer der Führungsbahnen (23) abgestützt ist, welche Lagereinrichtungen (27) jeweils einen Hebel (32) aufweisen, die sowohl an dem Führungselement (28) als auch am Schiebedeckel (18) in einem Drehlager (30, 31) befestigt sind, wobei das schiebedeckelseitigen Drehlager (30) eine Lagerachse (38) aufweist, die mit ihrem einen Ende in eine Steuerbahn (45) für die Schiebedeckelhubbewegung hineinragt, wobei auf dem Ende der Lagerachse (38), das in die Steuerbahn (45) hineinragt, ein Gleitelement (60) angeordnet ist, **dadurch gekennzeichnet, dass** neben dem Gleitelement (60) ein in die Steuerbahn (45) hineinragender Steuerfortsatz (62) an dem Hebel (32) vorgesehen ist, dass die Steuerbahn (45) zumindest eine Kreuzung zwischen einem Längssteuerabschnitt (64) und einem Hubsteuerabschnitt (65) aufweist und dass das Gleitelement (60) eine Außenkontur (61) derart aufweist, dass das Gleitelement (60) in jeder Bewegungsstellung (Bs) des Schiebedeckels (18) auf einem die Steuerbahn (45) begrenzenden Rand (51) aufliegt und es im Bereich der Kreuzung (67) an zumindest drei Punkten (67) auf dem Rand (51) abgestützt ist.

2. Dachanordnung nach Anspruch 1, **dadurch gekennzeichnet, dass** das Gleitelement (60) durch eine Federeinrichtung (52) auf den Rand (51) der Steuerbahn (45) gedrängt wird.

3. Dachanordnung nach Anspruch 2, **dadurch gekennzeichnet, dass** die Federeinrichtung (52) vorgespannt ist.

4. Dachanordnung nach Anspruch 1 , **dadurch gekennzeichnet, dass** die Außenkontur (61) des Gleitelements (60) dreieckförmig ist.

5. Dachanordnung nach Anspruch 1, **dadurch gekennzeichnet, dass** das Gleitelement einen Ausschnitt (63) aufweist, in dem der Steuerfortsatz (62) angeordnet ist.

6. Dachanordnung nach Anspruch 1, **dadurch gekennzeichnet, dass** das Gleitelement (60) aus einem Gleitlagerwerkstoff, vorzugsweise Kunststoff, hergestellt ist.

7. Dachanordnung nach Anspruch 1, **dadurch gekennzeichnet, dass** die erste Lagerachse (38) den Hebel (32) durchgreift und mit ihrem vom Lagerblock (37) abgewandten Ende in die die Schiebedeckelhubbewegung steuernde Steuerbahn (45) hineinragt.

8. Dachanordnung nach Anspruch 1, **dadurch gekennzeichnet, dass** der Schiebedeckel (18) seitlich jeweils über eine vordere Lagereinrichtung (27v) und eine hintere Lagereinrichtung (27h) in den Führungsbahnen (23) abgestützt ist.

9. Dachanordnung nach Anspruch 8, **dadurch gekennzeichnet, dass** die vordere Lagereinrichtung (27v) mit dem Gleitelement (60) ausgestattet ist.

10. Dachanordnung nach Anspruch 8, **dadurch gekennzeichnet, dass** die hintere Lagereinrichtung (27h) mit einer über eine Federeinrichtung (52) an den Rand (51) der Steuerbahn (45) gedrängten gestuften Lagerhülse (48) ausgestattet ist.

## Claims

1. Roof arrangement (1) for a vehicle, in particular a passenger vehicle (2), with a roof frame (14), a sliding cover (18), and two lateral guide tracks (23) in which the sliding cover (18) is guided in a movable manner to close or at least partially open up a roof opening (24), which sliding cover (18) interacts with a plurality of bearing devices (27), of which each bearing device (27) is coupled at one end to the sliding cover (18) and is supported at the other end via a guide element (28) in one of the guide tracks (23), which bearing devices (27) each have a lever (32), which levers are fastened both to the guide element (28) and to the sliding cover (18) in a rotary bearing (30, 31), wherein the rotary bearing (30) on the sliding-cover side has a bearing spindle (38) which projects at its one end into a control track (45) for the sliding-cover lifting movement, and wherein a sliding element (60) is arranged at that end of the bearing spindle (38) which projects into the control track (45), **characterized in that**, next to the sliding element (60), a control extension (62) which projects into the control track (45) is provided on the lever (32), **in that** the control track (45) has at least one intersection between a longitudinal control section (64) and a lifting control section (65), and **in that** the sliding element (60) has an outer contour (61) in such a manner that, in each movement position (Bs) of the sliding cover (18), the sliding element (60) rests on an edge (51) bounding the control track (45) and, in the region of the intersection (67), is supported on the edge (51) at at least three points (67).

2. Roof arrangement according to Claim 1, **characterized in that** the sliding element (60) is pressed onto the edge (51) of the control track (45) by a spring device (52).

3. Roof arrangement according to Claim 2, **characterized in that** the spring device (52) is prestressed.

4. Roof arrangement according to Claim 1, **characterized in that** the outer contour (61) of the sliding element (60) is triangular.

5. Roof arrangement according to Claim 1, **characterized in that** the sliding element has a cutout (63) in which the control extension (62) is arranged.

6. Roof arrangement according to Claim 1, **characterized in that** the sliding element (60) is produced from a sliding bearing material, preferably plastic.

7. Roof arrangement according to Claim 1, **characterized in that** the first bearing spindle (38) reaches through the lever (32) and projects at its end which faces away from the bearing block (37) into the control track (45) which controls the sliding-cover lifting movement.

8. Roof arrangement according to Claim 1, **characterized in that** the sliding cover (18) is supported laterally in the guide tracks (23) in each case via a front bearing device (27v) and a rear bearing device (27h).

9. Roof arrangement according to Claim 8, **characterized in that** the front bearing device (27v) is equipped with the sliding element (60).

10. Roof arrangement according to Claim 8, **characterized in that** the rear bearing device (27h) is equipped with a stepped bearing sleeve (48) which is pressed onto the edge (51) of the control track (45) via a spring device (52).

## Revendications

1. Agencement de toit (1) pour un véhicule, notamment un véhicule automobile léger (2), présentant un cadre de toit (14), un panneau coulissant (18), deux pistes de guidage latérales (23) dans lesquelles le panneau coulissant (18) est guidé de manière déplaçable pour fermer ou au moins ouvrir en partie une ouverture du toit (24), lequel panneau coulissant (18) coopère avec plusieurs dispositifs de palier (27), chaque dispositif de palier (27) étant d'une part articulé au panneau coulissant (18) et étant d'autre part supporté par le biais d'un élément de guidage (28) dans l'une des pistes de guidage (23), lesdits dispositifs de palier (27) présentant chacun un levier (32) qui est fixé à la fois à l'élément de guidage (28) et au panneau coulissant (18) dans un palier pivotant (30, 31), le palier pivotant (30) du côté du panneau coulissant présentant un axe de palier (38), qui pénètre par une extrémité dans une piste de commande (45) pour le déplacement de levage du panneau coulissant, un élément de glissement (60) étant disposé à l'extrémité de l'axe de pivotement (38), qui pénètre dans la piste de commande (45), **caractérisé en ce que** l'on prévoit sur le levier (32), en plus de l'élément de glissement (60), une saillie de commande (62) pénétrant dans la piste de commande (45), **en ce que** la piste de commande (45) présente au moins une intersection entre une portion de commande longitudinale (64) et une portion de commande de levage (65) et **en ce que** l'élément de glissement (60) présente un contour extérieur (61) de telle sorte que l'élément de glissement (60) s'applique dans chaque position de déplacement (Bs) du panneau coulissant (18) sur un bord (51) délimitant la piste de commande (45), et qu'il soit supporté dans la région de l'intersection (67) en au moins trois points (67) sur le bord (51).

2. Agencement de toit selon la revendication 1, **caractérisé en ce que** l'élément de glissement (60) est poussé par un dispositif de ressort (52) contre le bord (51) de la piste de commande (45).

3. Agencement de toit selon la revendication 2, **caractérisé en ce que** le dispositif de ressort (52) est précontraint.

4. Agencement de toit selon la revendication 1, **caractérisé en ce que** le contour extérieur (61) de l'élément de glissement (60) est triangulaire.

5. Agencement de toit selon la revendication 1, **caractérisé en ce que** l'élément de glissement présente une section (63) dans laquelle est disposée la saillie de commande (62).

6. Agencement de toit selon la revendication 1, **caractérisé en ce que** l'élément de glissement (60) est fabriqué en un matériau pour palier lisse, de préférence en plastique.

7. Agencement de toit selon la revendication 1, **caractérisé en ce que** le premier axe de palier (38) vient en prise à travers le levier (32) et pénètre avec son extrémité opposée au bloc palier (37) dans la piste de commande (45) commandant le mouvement de levage du panneau coulissant.

8. Agencement de toit selon la revendication 1, **caractérisé en ce que** le panneau coulissant (18) est supporté latéralement à chaque fois par le biais d'un dispositif de palier avant (27v) et d'un dispositif de palier arrière (27h), dans les pistes de guidage (23).

9. Agencement de toit selon la revendication 8, **caractérisé en ce que** le dispositif de palier avant (27v) est muni de l'élément de glissement (60).

10. Agencement de toit selon la revendication 8, **caractérisé en ce que** le dispositif de palier arrière (27h) est muni d'une douille-palier (48) étagée poussée par le biais d'un dispositif de ressort (52) contre le bord (51) de la piste de commande (45).
